# EUROPÄISCHE PATENTSCHRIFT

(11) **EP 3 631 237 B1**
(45) Veröffentlichungstag und Bekanntmachung des Hinweises auf die Patenterteilung: **30.12.2020**
(21) Anmeldenummer: 18721762.5
(22) Anmeldetag: 30.04.2018
(51) Int. Cl.: F16F 13/10, B60K 5/12

(54) **TRENNVORRICHTUNG ZUM TRENNEN EINER ARBEITSKAMMER UND EINER AUSGLEICHSKAMMER EINES HYDRAULISCH DÄMPFENDEN LAGERS SOWIE EIN HYDRAULISCH DÄMPFENDES LAGER**
PARTITION MEMBER FOR SEPARATING A WORKING CHAMBER AND A COMPENSATION CHAMBER IN A HYDRAULIC MOUNTING AND A HYDRAULIC MOUNTING
DISPOSITIF DE SÉPARATION POUR SÉPARER LA CHAMBRE DE TRAVAIL ET LA CHAMBRE D'EXPANSION D'UN SUPPORT À AMMORTISSEMENT HYDRAULIQUE ET SUPPORT À AMMORTISSEMENT HYDRAULIQUE

(30) Priorität: 01.06.2017 DE 102017112168
(43) Veröffentlichungstag der Anmeldung: 08.04.2020
(73) Patentinhaber: Vibracoustic AG, 64293 Darmstadt (DE)
(72) Erfinder: BECKMANN, Wolfgang, 64289 Darmstadt (DE)
(74) Vertreter: Patentanwälte Olbricht Buchhold Keulertz
(86) Internationale Anmeldenummer: PCT/EP2018/061047
(87) Internationale Veröffentlichungsnummer: WO 2018/219568

(56) Entgegenhaltungen:
- EP-A1- 1 574 743
- DE-A1- 19 620 971
- DE-A1-102012 217 427
- DE-A1-102015 118 931
- JP-A- S61 144 443
- US-A1- 2013 038 006

## Beschreibung

Die vorliegende Erfindung betrifft eine Trennvorrichtung zum Trennen einer Arbeitskammer und einer Ausgleichskammer eines hydraulisch dämpfenden Lagers, aufweisend eine erste Düsenscheibe und eine zweite Düsenscheibe, die aus einem ersten Werkstoff sind und einen Dämpfungskanal bilden, der die Arbeitskammer und die Ausgleichskammer miteinander verbindet. Ferner betrifft die Erfindung ein hydraulisch dämpfendes Lager zur Lagerung eines Kraftfahrzeugaggregats mit einer derartigen Trennvorrichtung.

Ein hydraulisch dämpfendes Lager der eingangs genannten Art wird zur Lagerung eines Kraftfahrzeugaggregats, wie beispielsweise eines Kraftfahrzeugmotors oder eines Getriebes, an einer Kraftfahrzeugkarosserie verwendet, um die vom Kraftfahrzeugaggregat erzeugten Schwingungen zu dämpfen. Ein hydraulisch dämpfendes Lager weist ein Traglager zur Befestigung des Kraftfahrzeugaggregats an dem Lager und ein Auflager auf, die durch eine elastomere Tragfeder miteinander verbunden sind. Die Tragfeder begrenzt zusammen mit dem Auflager eine Arbeitskammer, die über eine Trennvorrichtung von einer Ausgleichskammer getrennt ist. Die Ausgleichskammer ist durch eine Ausgleichsmembran begrenzt.
Die Arbeitskammer und die Ausgleichskammer sind mit einem Fluid gefüllt und über einen in die Trennvorrichtung eingebrachten Dämpfungskanal miteinander verbunden.

Die Dämpfung der vom Kraftfahrzeugaggregat eingeleiteten Schwingungen erfolgt über das hydraulische System, das aus der Arbeitskammer, der Ausgleichskammer und dem Dämpfungskanal gebildet ist. Die eingeleiteten Schwingungen führen zu einer Bewegung der Tragfeder, wodurch ein hydraulischer Druck innerhalb der Arbeitskammer aufgebaut wird. Infolge des Drucks strömt das Fluid von der Arbeitskammer über den Dämpfungskanal in die Ausgleichskammer. Durch den geringen Durchmesser des Dämpfungskanals und der damit verbundenen hohen mechanischen Übersetzung, die sich aus dem äquivalenten, verdrängten Querschnitt der Tragfeder in Relation zu dem Dämpfungskanalquerschnitt ergibt, werden die eingeleiteten Schwingungen gedämpft beziehungsweise getilgt.

US 2013/038006 A1 offenbart ein hydraulisch dämpfendes Lager, das eine Innenhülse, eine Außenhülse und zwei die beiden Hülsen miteinander verbindende Elastomerkörper aufweist. Die beiden Elastomerkörper begrenzen zwei mit Flüssigkeit gefüllte Kammern, die durch eine Trennwand voneinander getrennt sind. Die Trennwand weist ein ringförmiges steifes Element und ein elastisches Element auf, die über ein steifes Rohrelement miteinander verbunden sind. Zwischen dem ringförmigen Element und dem elastischen Element sind Kanäle ausgebildet, die die beiden Kammern, miteinander verbinden.

Ferner offenbart EP 1 574 743 A1 ein hydraulisch dämpfendes Lager mit einem Auflager und einem Traglager, die durch eine elastomere Tragfeder miteinander verbunden sind, wobei die Tragfeder eine Arbeitskammer begrenzt, die durch eine Trennvorrichtung von einer Ausgleichskammer getrennt ist, wobei die beiden Kammern über einen in die Trennvorrichtung eingebrachten Dämpfungskanal miteinander verbunden sind. Die Trennvorrichtung weist einen Hauptkörper und einen Abdeckkörper auf, wobei der Abdeckkörper eine Metallplatte und eine daran anvulkanisierte elastomere Dichtungslage umfasst.

Aus JP S61 144443 A geht ein hydraulisch dämpfendes Lager hervor, dessen Arbeitskammern durch eine Trennvorrichtung getrennt sind, wobei die Trennvorrichtung einen Dämpfungskanal ausbildet, der die beiden Kammern miteinander verbindet. Die Trennvorrichtung umfasst zwei Düsenscheiben, zwischen denen ein Dichtungsring angeordnet ist.

Des Weiteren geht aus DE 196 20 971 A1 ein Hydrolager mit einer Trennwand hervor, in die ein Dämpfungskanal eingebracht ist. Die Trennwand besteht aus zwei Teilkanälen, wobei der erste Teilkanal mit einer ersten Hälfte eines Düsenkäfigs und der zweite Kanal mit einer zweiten Hälfte des Düsenkäfigs einstückig ineinander übergehend ausgebildet sind. Die Membran weist zur Abdichtung der beiden Teilkanäle gegeneinander eine Kanaltrennung auf, die bezogen auf die in radialer Richtung beiderseits angrenzenden Teilbereiche dicker ausgebildet ist.

Zudem betrifft DE 10 2015 118 931 A1, welches den nächstliegenden Stand der Technik darstellt, ein Hydrolager umfassend einen Hydromodul mit einer Tragfeder, die einen Lagerkern abstützt, eine Arbeitskammer umschließt und sich an einem Außenring, an dem ein Deckel festgelegt ist, abstützt, einer von der Arbeitskammer durch eine Zwischenplatte getrennten und von einer Ausgleichsmembran begrenzten Ausgleichskammer, wobei die Ausgleichskammer und die Arbeitskammer mit einer Dämpfungsflüssigkeit gefüllt ist und über einen in der Zwischenplatte angeordneten Dämpfungskanal flüssigkeitsleitend miteinander verbunden sind, und ein das Hydromodul aufnehmendes Gehäuse.

Zudem geht aus DE 10 2012 217 427 A1 ein Hydrolager mit zwei durch eine Düsenscheibe getrennten, mit hydraulischer Flüssigkeit gefüllten Kammern hervor, die durch einen in die Düsenscheibe eingebrachten Kanal flüssigkeitsleitend miteinander verbunden sind. Die Düsenscheibe ist zweiteilig ausgebildet, wobei zwischen den beiden Teilen eine Schaltmembran eingebracht ist, die einen Bypasskanal in der Düsenscheibe zwischen den beiden Kammern strömungsgesteuert verschließt, sofern die axiale Belastung des Hydrolagers ein vorgegebenes Belastungsmaximum übersteigt.

Der vorliegenden Erfindung liegt die Aufgabe zugrunde, eine Trennvorrichtung sowie ein hydraulisch dämpfendes Lager zu schaffen, die eine verbesserte Dämpfung aufweisen.

Zur Lösung der Aufgabe werden eine Trennvorrichtung mit den Merkmalen des Anspruchs 1 und ein hydraulisch dämpfendes Lager mit den Merkmalen des Anspruchs 9 vorgeschlagen.

Vorteilhafte Ausgestaltungen der Trennvorrichtung sind Gegentand der abhängigen Ansprüche.

Gemäß einem Aspekt wird eine Trennvorrichtung zum Trennen einer Arbeitskammer und einer Ausgleichskammer eines hydraulisch dämpfenden Lagers vorgeschlagen, die eine erste Düsenscheibe und eine zweite Düsenscheibe aufweist, die aus einem ersten Werkstoff sind und einen Dämpfungskanal bilden, der die Arbeitskammer und die Ausgleichskammer miteinander verbindet, wobei die erste Düsenscheibe ein Dichtelement aus einem zweiten Werkstoff aufweist, das an der zweiten Düsenscheibe anliegt, um den Dämpfungskanal abzudichten.

Das Dichtelement dichtet den Dämpfungskanal zuverlässig und prozesssicher ab und verhindert so ein Austreten von Fluid aus dem Dämpfungskanal während selbiges von der Arbeitskammer in die Ausgleichskammer strömt, um die eingeleiteten Schwingungen zu bedämpfen. Dadurch werden eine Verschiebung der Frequenzlage und eine Erhöhung der Toleranzen vermieden, so dass ein mit der Trennvorrichtung versehenes hydraulisch dämpfendes Lager eine verbesserte Dämpfung und somit Performance aufweist. Um ein hin und her fließen zwischen den beiden Kammern zu ermöglichen, sind beide Düsenscheiben mit jeweils einer Öffnung versehen, über die Fluid in den Dämpfungskanal und/oder aus dem Dämpfungskanal strömen kann.

In einer vorteilhaften Ausgestaltung sind die erste Düsenscheibe und das Dichtelement im Zwei-Komponenten-Spritzgussverfahren hergestellt. Dadurch kann auf einfache, prozesssichere und kostengünstige Weise das Dichtelement hergestellt und mit der ersten Düsenscheibe verbunden werden. So kann zunächst der erste Werkstoff in eine Kavität einer Spritzgussform eingespritzt werden und anschließend wird der zweite Werkstoff in die Kavität eingespritzt. Ferner können der erste Werkstoff und der zweite Werkstoff gleichzeitig in eine Kavität einer Spritzgussform eingespritzt werden.

In einer vorteilhaften Ausgestaltung ist der erste Werkstoff ein faserverstärkter Kunststoff, und der zweite Werkstoff ist ein thermoplastisches Elastomer. Eine aus faserverstärktem Kunststoff hergestellte Trennvorrichtung weist ein niedriges Gewicht und gleichzeitig eine hohe Festigkeit gegenüber dem in der Arbeitskammer auftretenden hydraulischen Druck auf. Ein aus thermoplastischen Elastomer hergestelltes Dichtelement weist ausreichende Dichteigenschaften zur Abdichtung des Dämpfungskanals auf.

In einer vorteilhaften Ausgestaltung umgibt das Dichtelement die erste Düsenscheibe außenumfangsseitig. Das Dichtelement kann als eine Dichtkante ausgebildet sein, die die erste Düsenscheibe außenumfangsseitig umgibt. Ferner kann das Dichtelement als eine von der ersten Düsenscheibe abragende, insbesondere senkrecht abragende, Dichtlippe ausgebildet sein, die die erste Düsenscheibe außenumfangsseitig umgibt.

Die zweite Düsenscheibe weist eine Aufnahmeöffnung auf, in die die erste Düsenscheibe eingesetzt ist. Vorteilhaft bildet die in die Aufnahmeöffnung der zweiten Düsenscheibe eingesetzte erste Düsenscheibe zusammen mit der zweiten Düsenscheibe den Dämpfungskanal. Hierzu kann die zweite Düsenscheibe eine kanalförmige Vertiefung aufweisen, die von der ersten Düsenscheibe, insbesondere einem Abschnitt der ersten Düsenscheibe, verschlossen wird. Das Dichtelement liegt bevorzugt an einer Innenumfangswand der Aufnahmeöffnung dichtend an, um den Dämpfungskanal prozesssicher abzudichten. Vorteilhaft ist die erste Düsenscheibe in die Aufnahmeöffnung mittels einer Presspassung eingesetzt, um eine ausreichende Abdichtung des Dämpfungskanals zu gewährleisten.

Zwischen dem Dichtelement und einer Innenumfangswand der Aufnahmeöffnung besteht eine Übermaßpassung bestehen. Durch die Übermaßpassung wird eine ausreichende Abdichtung des Dämpfungskanals gewährleistet.

In einer vorteilhaften Ausgestaltung weist die Aufnahmeöffnung einen umlaufenden Absatz auf, an dem das Dichtelement anliegt. Die erste Düsenscheibe wird in die Aufnahmeöffnung eingesetzt, insbesondere eingepresst, bis das Dichtelement an dem Absatz zur Anlage kommt. Die Kombination aus der Übermaßpassung zwischen der Innenumfangswand und dem Dichtelement sowie der Anlage des Dichtelements an einem Absatz gewährleistet ein prozesssicheres Abdichten des Dämpfungskanals.

In einer vorteilhaften Ausgestaltung ist ein Kanal aus einem ersten Kanalabschnitt und einem zweiten Kanalabschnitt gebildet, die durch die erste Düsenscheibe voneinander getrennt und mittels des Dichtelementes gegeneinander abgedichtet sind. Dadurch wird ein Doppelstockkanal gebildet. Ein Doppelstockkanal ermöglicht eine Dämpfungsverschiebung zu niedrigen Frequenzen und weist eine optimierte Entkopplung mit maximal möglicher Offenfläche auf. Vorteilhaft weist die erste Düsenscheibe den ersten Kanalabschnitt und die zweite Düsenscheibe den zweiten Kanalabschnitt auf. In einer vorteilhaften Ausgestaltung sind der erste Kanalabschnitt und der zweite Kanalabschnitt übereinander angeordnet. Ferner können die beiden Kanalabschnitte nebeneinander angeordnet sein.

In einer vorteilhaften Ausgestaltung weist die erste Düsenscheibe außenumfangsseitig einen Kanal auf, der an der Innenumfangswand einer Aufnahmeöffnung anliegt, um den ersten Kanalabschnitt zu bilden, wobei der Kanal einen ersten Schenkel, einen zweiten Schenkel und eine die beiden Schenkel miteinander verbindende Basis aufweist, wobei an einem freien Ende des ersten Schenkels das Dichtelement angeordnet ist. Bevorzugt ist der Kanal im Querschnitt C-förmig ausgebildet. Weiterhin vorteilhaft trennt der erste Schenkel die beiden Kanalabschnitte voneinander, wobei das an dem freien Ende des ersten Schenkels angeordnete, insbesondere angespritzte, Dichtelement die beiden Kanalabschnitte gegeneinander abdichtet.

In einer vorteilhaften Ausgestaltung ist zwischen den Düsenscheiben eine Membran aufgenommen. Die Membran ist aus einem elastischen, insbesondere elastomeren Material und dient zur Entkopplung hochfrequenter, kleinamplitudiger Schwingungen. Hierzu schwingt die Membran bei hochfrequenten kleinamplitudigen Schwingungen, so dass eine Dämpfung über den Dämpfungskanal entkoppelt wird. Die Membran kann zwischen den beiden Düsenscheiben mit Spiel angeordnet oder abschnittsweise geklemmt sein.

Gemäß einem weiteren Aspekt wird ein hydraulisch dämpfendes Lager zur Lagerung eines Kraftfahrzeugaggregats vorgeschlagen, aufweisend ein Auflager und ein Traglager, die durch eine Tragfeder aus einem elastomeren Material miteinander verbunden sind, wobei die Tragfeder eine Arbeitskammer begrenzt, die durch eine Trennvorrichtung von einer Ausgleichskammer getrennt ist, wobei die Arbeitskammer und die Ausgleichskammer mit einem Fluid gefüllt und über einen in die Trennvorrichtung eingebrachten Dämpfungskanal miteinander verbunden sind.

Im Folgenden werden eine Trennvorrichtung, ein hydraulisch dämpfendes Lager sowie weitere Merkmale und Vorteile anhand eines Ausführungsbeispiels näher erläutert, die in den Figuren schematisch dargestellt sind. Hierbei zeigen:
- Fig. 1: einen Vertikalschnitt durch ein hydraulisch dämpfendes Lager mit einer Trennvorrichtung; und
- Fig. 2: eine vergrößerte Ansicht der in Fig. 1 dargestellten Trennvorrichtung.

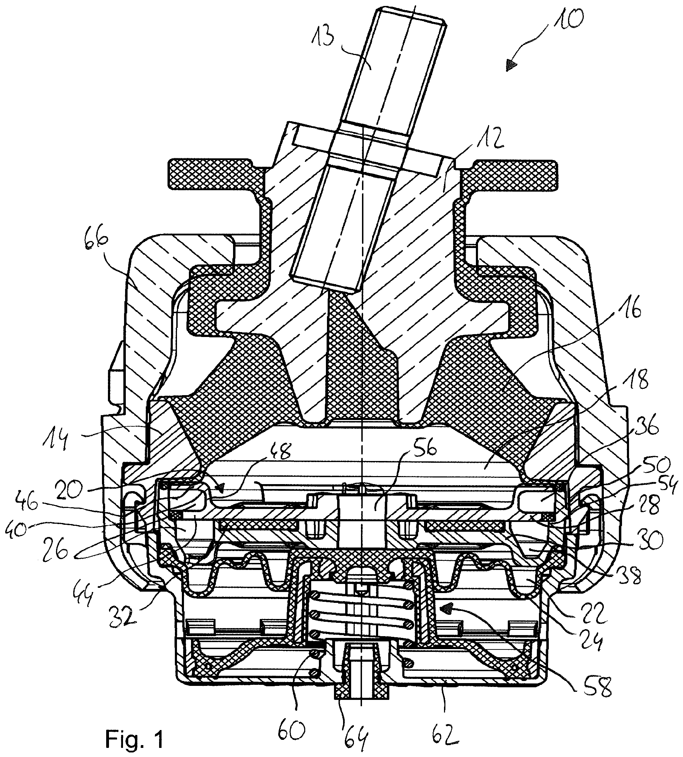

In Fig. 1 ist ein hydraulisch dämpfendes Lager 10 gezeigt, das zur Lagerung eines nicht dargestellten Kraftfahrzeugaggregats, wie beispielsweise eines Kraftfahrzeugmotors oder eines Getriebes, an einer nicht dargestellten Kraftfahrzeugkarosserie dient.

Das hydraulisch dämpfende Lager 10 weist ein Traglager 12 und ein Auflager 14 auf, die über eine Tragfeder 16 aus einem elastomeren Werkstoff miteinander verbunden sind. In das Traglager 12 ist ein Bolzen 13 zur Befestigung eines nicht dargestellten Kraftfahrzeugaggregats eingebracht. Die Tragfeder 16 nimmt die statischen Lasten auf und bewirkt eine akustische Isolierung.

Das Traglager 12, das Auflager 14 und die Tragfeder 16 begrenzen eine Arbeitskammer 18, die durch eine Trennvorrichtung 20 von einer Ausgleichskammer 22 getrennt ist. Die Ausgleichskammer 22 wird durch eine Ausgleichsmembran 24 begrenzt. Die Arbeitskammer 18 und die Ausgleichskammer 22 sind mit einem Fluid gefüllt. Die Trennvorrichtung 20 weist einen Dämpfungskanal 26 auf, der die Arbeitskammer 18 und die Ausgleichskammer 22 flüssigkeitsleitend miteinander verbindet.

Über den Dämpfungskanal 26 werden die durch das Kraftfahrzeugaggregat eingeleiteten niederfrequenten Schwingungen mit großer Amplitude gedämpft beziehungsweise getilgt. Die eingeleiteten Schwingungen führen zu einer Bewegung der Tragfeder 16, wodurch ein hydraulischer Druck innerhalb der Arbeitskammer 18 aufgebaut wird. Infolge des Drucks strömt das Fluid von der Arbeitskammer 18 über den Dämpfungskanal 26 in die Ausgleichskammer 22. Durch den geringen Durchmesser des Dämpfungskanals 26 und der damit verbundenen hohen mechanischen Übersetzung, die sich aus dem äquivalenten, verdrängten Querschnitt der Tragfeder 16 in Relation zu dem Dämpfungskanalquerschnitt ergibt, werden die eingeleiteten Schwingungen gedämpft beziehungsweise getilgt.

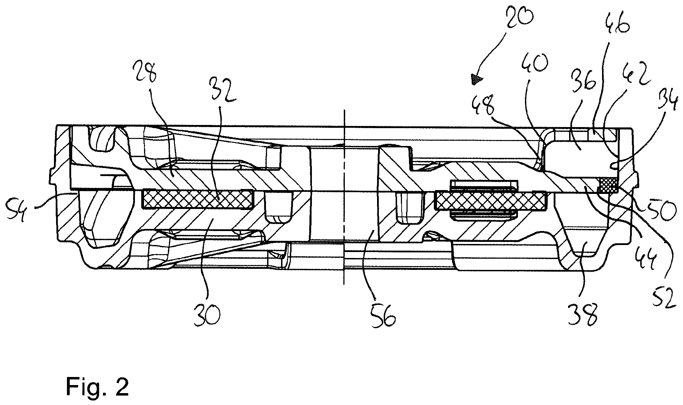

Wie in Fig. 2 ersichtlich ist, weist die Trennvorrichtung 20 eine erste Düsenscheibe 28 und eine zweite Düsenscheibe 30 auf, die aus einem ersten Werkstoff sind. Der erste Werkstoff kann ein Kunststoff, insbesondere ein faserverstärkter Kunststoff, sein. Zwischen den Düsenscheiben 28, 30 ist eine Membran 32 aus einem elastomeren Werkstoff angeordnet, die jeweils randseitig zwischen den Düsenscheiben 28, 30 geklemmt ist.

Die Membran 32 dient zur Entkopplung hochfrequenter, kleinamplitudiger Schwingungen, das heißt, im akustisch relevanten Bereich, indem die Membran 32 bei hochfrequenten, kleinamplitudigen Schwingungen schwingt, wodurch eine Dämpfung über den Dämpfungskanal 26 entkoppelt wird.

Um ein hin und her fließen zwischen den beiden Kammern zu ermöglichen, sind beide Düsenscheiben 28, 30 mit einer nicht dargestellten Öffnung versehen, über die das Fluid in den Dämpfungskanal 26 und/oder aus dem Dämpfungskanal 26 strömen kann.

Die zweite Düsenscheibe 30 weist eine Aufnahmeöffnung 34 auf, in die die erste Düsenscheibe 28 eingesetzt ist. Die erste Düsenscheibe 28 ist mittels einer Übermaßpassung in die Aufnahmeöffnung 34 eingesetzt.

Wie in Fig. 2 ersichtlich ist, unterteilt die erste Düsenscheibe 28 den Dämpfungskanal 26 in einen ersten Kanalabschnitt 36 und einen zweiten Kanalabschnitt 38. Beide Kanalabschnitte 36, 38 sind übereinander angeordnet.

Die erste Düsenscheibe 28 weist außenumfangsseitig einen umlaufenden Kanal 40 auf, der an einer Innenumfangswand 42 der Aufnahmeöffnung 34 anliegt und den ersten Kanalabschnitt 36 bildet. Der Kanal 40 ist näherungsweise C-förmig ausgebildet und weist einen ersten Schenkel 44, einen zweiten Schenkel 46 und eine die beiden Schenkel 44, 46 miteinander verbindende Basis 48 auf, wobei der erste Schenkel 44 die beiden Kanalabschnitte 36, 38 voneinander trennt.

Um die beiden Kanalabschnitte 36, 38 gegeneinander abzudichten, weist die erste Düsenscheibe 28 ein Dichtelement 50 aus einem zweiten Werkstoff auf, das dichtend an der Innenumfangswand 42 der Aufnahmeöffnung 34 anliegt. Das Dichtelement 50 ist an einem freien Ende 52 des ersten Schenkels 44 angeordnet und ist vorliegend als eine Dichtkante ausgebildet, die die erste Düsenscheibe 28, insbesondere den ersten Schenkel 44, umgibt. Alternativ kann das Dichtelement 50 als eine Dichtlippe ausgebildet sein. Zwischen der Innenumfangswand 42 und dem Dichtelement 50 besteht eine Übermaßpassung.

Um eine verbesserte Abdichtung der beiden Kanalabschnitte 36, 38 zu erzielen, weist die Aufnahmeöffnung 34 einen umlaufenden Absatz 54 auf, an dem das Dichtelement 50 anliegt.

Das Dichtelement 50 ist aus einem thermoplastischen Elastomer. Dadurch können die erste Düsenscheibe 28 und das Dichtelement 50 im Zwei-Komponenten-Spritzgussverfahren hergestellt werden. Das im Zwei-Komponenten-Spritzgussverfahren an die erste Düsenscheibe 28 angespritzte Dichtelement 50 ist somit kostengünstig herstellbar und dichtet zuverlässig die beiden Kanalabschnitten 36, 38 gegeneinander ab. Dadurch wird eine interne Leckage vermieden, so dass das hydraulisch dämpfende Lager 10 eine verbesserte Dämpfung und somit Performance aufweist.

Wie zudem in Fig. 1 ersichtlich ist, ist in die Trennvorrichtung 20 ein Leerlaufkanal 56 eingebracht, der auch als Tilgerkanal bezeichnet werden kann, und der mittels einer Schaltvorrichtung 58 freigebbar oder verschließbar ist.

Der Leerlaufkanal 56 reduziert in der Offenstellung die dynamische Lagersteifigkeit im Motorleerlauf. In der Offenstellung kann eine Flüssigkeitssäule innerhalb des Leerlaufkanals 56 schwingen, so dass die im Motorleerlauf auftretenden hochfrequenten Motorschwingungen aufgrund der kleinen wirksamen Federrate in deutlich gemilderter Form auf eine nicht dargestellte Kraftfahrzeugkarosserie übertragen werden.

Wenn der Tilgerkanal 56 geschlossen ist, arbeitet das hydraulisch dämpfende Lager 10 wie ein herkömmliches Lager, indem niederfrequente Schwingungen mit großer Amplitude durch eine Flüssigkeitsverschiebung innerhalb des Dämpfungskanals 26 gedämpft und hochfrequente Schwingungen mit kleiner Amplitude mit Hilfe der Membran 32 isoliert beziehungsweise entkoppelt werden.

Die Schaltvorrichtung 58 weist ein Federelement 60 auf, das mit der Ausgleichsmembran 24 verbunden ist und sich an einem Lagerdeckel 62 abstützt. Das Federelement 60 drängt die Ausgleichsmembran 24 gegen die Trennvorrichtung 20, um den Leerlaufkanal 56 zu verschließen. Zum Öffnen des Leerlaufkanals 56 ist die Schaltvorrichtung 58 über einen Anschluss 64 mit einer nicht dargestellten Unterdruckquelle verbunden, wobei durch Anlegen eines Unterdrucks die Ausgleichsmembran 24 gegen die Kraft des Federelements 60 von der Trennvorrichtung 20 weg bewegt wird, um den Leerlaufkanal 56 zu öffnen.

Der Lagerdeckel 62 ist an dem Auflager 14 mittels einer Clipsverbindung befestigt. Über den Lagerdeckel 62 stützt sich das hydraulisch dämpfende Lager 10 an einer nicht dargestellten Kraftfahrzeugkarosserie ab. Ferner ist das hydraulisch dämpfende Lager 10 von einem Gehäuse 66 umgeben, das das Lager 10 vor Wärmeeinflüssen schützt.

### Bezugszeichenliste

- 10: hydraulisch dämpfendes Lager
- 12: Traglager
- 13: Bolzen
- 14: Auflager
- 16: Tragfeder
- 18: Arbeitskammer
- 20: Trennvorrichtung
- 22: Ausgleichskammer
- 24: Ausgleichsmembran
- 26: Dämpfungskanal
- 28: erste Düsenscheibe
- 30: zweite Düsenscheibe
- 32: Membran
- 34: Aufnahmeöffnung
- 36: erster Kanalabschnitt
- 38: zweiter Kanalabschnitt
- 40: Kanal
- 42: Innenumfangswand
- 44: erster Schenkel
- 46: zweiter Schenkel
- 48: Basis
- 50: Dichtelement
- 52: freies Ende
- 54: Absatz
- 56: Leerlaufkanal
- 58: Schaltvorrichtung
- 60: Federelement
- 62: Lagerdeckel
- 64: Anschluss
- 66: Gehäuse

## Patentansprüche

1. Trennvorrichtung (20) zum Trennen einer Arbeitskammer (18) und einer Ausgleichskammer (22) eines hydraulisch dämpfenden Lagers (10), aufweisend eine erste Düsenscheibe (28) und eine zweite Düsenscheibe (30), die aus einem ersten Werkstoff sind und einen Dämpfungskanal (26) bilden, der die Arbeitskammer (18) und die Ausgleichskammer (22) miteinander verbinden kann, wobei die zweite Düsenscheibe (30) eine Aufnahmeöffnung (34) aufweist, in die die erste Düsenscheibe (28) eingesetzt ist, **dadurch gekennzeichnet, dass** die erste Düsenscheibe (28) ein Dichtelement (50) aus einem zweiten Werkstoff aufweist, das an der zweiten Düsenscheibe (30) anliegt, um den Dämpfungskanal (26) abzudichten, wobei zwischen dem Dichtelement (50) und einer Innenumfangswand (42) der Aufnahmeöffnung (34) eine Übermaßpassung besteht.

2. Trennvorrichtung (20) nach Anspruch 1, **dadurch gekennzeichnet, dass** die erste Düsenscheibe (28) und das Dichtelement (50) im Zwei-Komponenten-Spritzgussverfahren hergestellt sind.

3. Trennvorrichtung (20) nach Anspruch 1 oder 2, **dadurch gekennzeichnet, dass** der erste Werkstoff ein faserverstärkter Kunststoff ist und dass der zweite Werkstoff ein thermoplastisches Elastomer ist.

4. Trennvorrichtung (20) nach einem der vorhergehenden Ansprüche, **dadurch gekennzeichnet, dass** das Dichtelement (50) die erste Düsenscheibe (28) außenumfangsseitig umgibt.

5. Trennvorrichtung (20) nach einem der vorhergehenden Ansprüche, **dadurch gekennzeichnet, dass** die Aufnahmeöffnung (34) einen umlaufenden Absatz (54) aufweist, an dem das Dichtelement (50) anliegt.

6. Trennvorrichtung (20) nach einem der vorhergehenden Ansprüche, **dadurch gekennzeichnet, dass** ein Kanal (40) aus einem ersten Kanalabschnitt (36) und einem zweiten Kanalabschnitt (38) gebildet ist, die durch die erste Düsenscheibe (28) voneinander getrennt und mittels des Dichtelementes (50) gegeneinander abgedichtet sind.

7. Trennvorrichtung (20) nach Anspruch 6, **dadurch gekennzeichnet, dass** die erste Düsenscheibe (28) außenumfangsseitig einen Kanal (40) aufweist, der an der Innenumfangswand (42) der Aufnahmeöffnung (34) anliegt, um den ersten Kanalabschnitt (36) zu bilden, wobei der Kanal (40) einen ersten Schenkel (44), einen zweiten Schenkel (46) und eine die beiden Schenkel (44, 46) miteinander verbindende Basis (48) aufweist, wobei an einem freien Ende (52) des ersten Schenkels (44) das Dichtelement (50) angeordnet ist.

8. Trennvorrichtung (20) nach einem der vorhergehenden Ansprüche, **dadurch gekennzeichnet, dass** zwischen den Düsenscheiben (28, 30) eine Membran (32) aufgenommen ist.

9. Hydraulisch dämpfendes Lager (10) zur Lagerung eines Kraftfahrzeugaggregats, aufweisend ein Auflager (14) und ein Traglager (12), die durch eine Tragfeder (16) aus einem elastomeren Material miteinander verbunden sind, wobei die Tragfeder (16) eine Arbeitskammer (18) begrenzt, die durch eine Trennvorrichtung (20) nach einem der Ansprüche 1 bis 8 von einer Ausgleichskammer (22) getrennt ist, wobei die Arbeitskammer (18) und die Ausgleichskammer (22) mit einem Fluid gefüllt und über einen in die Trennvorrichtung (20) eingebrachten Dämpfungskanal (26) miteinander verbunden sind.

## Claims

1. Separating device (20) for separating a working chamber (18) and a compensation chamber (22) of a hydraulically damping bearing (10), comprising a first nozzle disc (28) and a second nozzle disc (30), which are made of a first material and form a damping channel (26) which can connect the working chamber (18) and the compensation chamber (22) to one another, the second nozzle disc (30) having a receiving opening (34), into which the first nozzle disc (28) is inserted, **characterised in that** the first nozzle disc (28) has a sealing element (50) made of a second material which abuts the second nozzle disc (30) in order to seal the damping channel (26), wherein an interference fit exists between the sealing element (50) and an inner circumferential wall (42) of the receiving opening (34).

2. Separating device (20) according to claim 1, **characterised in that** the first nozzle disc (28) and the sealing element (50) are produced in a two-component injection moulding process.

3. Separating device (20) according to claim 1 or 2, **characterised in that** the first material is a fibre-reinforced plastic and that the second material is a thermoplastic elastomer.

4. Separating device (20) according to one of the preceding claims, **characterised in that** the sealing element (50) surrounds the first nozzle disc (28) on the outer circumference.

5. Separating device (20) according to one of the preceding claims, **characterised in that** the receiving opening (34) has a circumferential shoulder (54) against which the sealing element (50) rests.

6. Separating device (20) according to one of the preceding claims, **characterised in that** the channel (40) is formed from a first channel section (36) and a second channel section (38), which are separated from one another by the first nozzle disc (28) and which are sealed against one another by the sealing element (50).

7. Separating device (20) according to claim 6, **characterised in that** the first nozzle disc (28) has a channel (40) on the outer circumferential side which abuts the inner circumferential wall (42) of the receiving opening (34) to form the first channel section (36), wherein the channel (40) comprises a first leg (44), a second leg (46) and a base (48) connecting the two legs (44, 46) together, wherein the sealing element (50) is arranged at a free end (52) of the first leg (44).

8. Separating device (20) according to one of the preceding claims, **characterised in that** a membrane (32) is included between the nozzle discs (28, 30).

9. Hydraulically damping bearing (10) for mounting a motor vehicle unit, comprising a bearing (14) and a support bearing (12) which are connected to one another by a support spring (16) made of an elastomeric material, the support spring (16) delimiting a working chamber (18), which is separated from an compensation chamber (22) by a separating device (20) according to one of claims 1 to 8, the working chamber (18) and the compensation chamber (22) being filled with a fluid and being connected to one another via a damping channel (26) introduced into the separating device (20).

## Revendications

1. Dispositif de séparation (20) pour séparer une chambre de travail (18) et une chambre de compensation (22) d'un palier à amortissement hydraulique (10), comprenant un premier disque de buse (28) et un deuxième disque de buse (30), qui sont fabriqués dans un premier matériau et forment un canal d'amortissement (26) qui peut relier la chambre de travail (18) et la chambre de compensation (22) l'une à l'autre, le deuxième disque de buse (30) présentant une ouverture de réception (34), dans lequel le premier disque de buse (28) est inséré, **caractérisé en ce que** le premier disque de buse (28) présente un élément d'étanchéité (50) en un deuxième matériau, qui s'appuie sur le deuxième disque de buse (30) pour étancher le canal d'amortissement (26), un ajustement serré existant entre l'élément d'étanchéité (50) et une paroi périphérique intérieure (42) de l'ouverture de réception (34).

2. Dispositif de séparation (20) selon la revendication 1, **caractérisé en ce que** le premier disque de buse (28) et l'élément d'étanchéité (50) sont fabriqués dans un procédé de moulage par injection à deux composants.

3. Dispositif de séparation (20) selon la revendication 1 ou 2, **caractérisé en ce que** le premier matériau est un plastique renforcé par des fibres et que le second matériau est un élastomère thermoplastique.

4. Dispositif de séparation (20) selon l'une des revendications précédentes, **caractérisé en ce que** l'élément d'étanchéité (50) entoure le premier disque de buse (28) sur la circonférence extérieure.

5. Dispositif de séparation (20) selon l'une des revendications précédentes, **caractérisé en ce que** l'ouverture de réception (34) présente un épaulement circonférentiel (54) contre lequel s'appuie l'élément d'étanchéité (50).

6. Dispositif de séparation (20) selon l'une des revendications précédentes, **caractérisé en ce que** le canal (40) est formé d'une première section de canal (36) et d'une deuxième section de canal (38), qui sont séparées l'une de l'autre par le premier disque de buse (28) et sont rendues étanches l'une par rapport à l'autre au moyen de l'élément d'étanchéité (50).

7. Dispositif de séparation (20) selon la revendication 6, **caractérisé en ce que** le premier disque de buse (28) présente sur le côté circonférentiel extérieur un canal (40) qui s'appuie contre la paroi circonférentielle intérieure (42) de l'ouverture de réception (34) pour former la première section de canal (36), dans lequel le canal (40) comprend une première branche (44), une deuxième branche (46) et une base (48) reliant les deux branches (44, 46) entre elles, dans lequel l'élément d'étanchéité (50) est disposé à une extrémité libre (52) de la première branche (44).

8. Dispositif de séparation (20) selon l'une des revendications précédentes, **caractérisé en ce qu'**une membrane (32) est reçue entre les disques à buses (28, 30).

9. Palier à amortissement hydraulique (10) pour le montage d'une unité de véhicule automobile, comportant un support (14) et un palier d'appui (12) qui sont reliés entre eux par un ressort d'appui (16) en matériau élastomère, le ressort d'appui (16) délimitant une chambre de travail (18), qui est séparée d'une chambre de compensation (22) par un dispositif de séparation (20) selon l'une des revendications 1 à 8, la chambre de travail (18) et la chambre de compensation (22) étant remplies d'un fluide et étant reliées entre elles par un canal d'amortissement (26) introduit dans le dispositif de séparation (20).
